# EUROPEAN PATENT APPLICATION

(11) **EP 3 192 977 A1**
(43) Date of publication of application: **19.07.2017**
(21) Application number: 16204299.8
(22) Date of filing: 15.12.2016
(51) Int. Cl.: F01D 11/12

(54) **FAN CASING ARRANGEMENT**

(30) Priority: 12.01.2016 GB 201600510
(71) Applicant: Rolls-Royce plc, London SW1E 6AT (GB); Rolls-Royce Corporation, Indianapolis, Indiana 46225 (US)
(72) Inventor: Engebretsen, Eric, Indianapolis, IN Indiana IN 46225 (US); Backler, Andrew, Derby, Derbyshire DE24 8BJ (GB); Reed, Julian, Derby, Derbyshire DE24 8BJ (GB); Thompson, Ewan, Derby, Derbyshire DE24 8BJ (GB)
(74) Representative: Rolls-Royce plc

(57) **Abstract**

A fan casing arrangement for a gas turbine engine, the arrangement comprising an annular casing member and a fan track liner provided radially inward of the casing member and connected thereto. A forward portion of a gas washed surface of the fan track liner is curved so as to define a concave portion of the gas washed surface (e.g. curved such that the radial position of said forward portion of the gas washed surface varies in an axial direction).

## Description

### TECHNICAL FIELD

The present disclosure concerns a casing arrangement and/or a gas turbine engine.

### BACKGROUND

Turbofan gas turbine engines (which may be referred to simply as 'turbofans') are typically employed to power aircraft. Turbofans are particularly useful on commercial aircraft where fuel consumption is a primary concern. Typically a turbofan gas turbine engine will comprise an axial fan driven by an engine core. The fan generally includes an array of radially extending fan blades mounted on a rotor. The engine core is generally made up of one or more turbines which drive respective compressors via coaxial shafts. The fan is usually driven off an additional lower pressure turbine in the engine core.

To satisfy regulatory requirements, turbofan gas turbine engines are required to demonstrate that if part or all of a fan blade were to become detached from the remainder of the fan, that the detached parts are suitably captured within the engine. This function is provided by the fan case and liners. One particular liner is particularly important; this is the liner immediately out-board of the fan blades, commonly known as the fan track liner.

Fan cases may have a fence or hook feature to limit the forward movement of a released fan blade. Such a feature typically protrudes radially inwardly and rearwardly from the bore of the case (often being generally L-shaped). In one variant of containment arrangement, a forward portion of the fan tack liner (i.e. a portion adjacent to the case hook) is arranged in a "trap-door" configuration. This has the advantage of making it easier for a released portion of the fan blade to interact in a positive manner with the hook, thus effectively limiting forward movement of the released portion of the fan blade.

In containment arrangements having a trapdoor configuration, a fan track liner is arranged radially inward of the casing with a gap provided between a forward portion of the liner and the hook. The fan track liner is pivotally connected to the casing at a position spaced rearwardly from the hook of the casing. In the event of a fan blade being released from the fan, a portion of the fan track liner in the region of the blade impact will pivot into the gap that was provided between the liner and the casing (and to a certain extent will deform), such that the released blade impacts the hook and travel of the released blade is controlled.

The fan track liner typically includes an annular layer of abradable material which surrounds the fan blades. Generally a gas washed surface of the abradable layer is provided such that at engine pass-off running one or more of the fan blades rub against and removes a portion of the abradable layer such that a minimum gap is provided between the fan track liner and a tip of the fan blades. In this way tip leakage can be minimised and aerodynamic performance improved. During operation of the engine, the fan blades rotate freely within the fan track liner. However, under extreme operating conditions the blades of the engine may rub against the abradable material and remove a portion of the abradable material from the fan track liner. It is desirable to minimise these extreme rub events so as to optimise performance of the engine and improve the life of the fan track liner.

### SUMMARY

According to a first aspect there is provided a fan casing arrangement for a gas turbine engine. The arrangement comprises an annular casing member; and a fan track liner provided radially inward of the casing member and connected thereto. A forward portion of a gas washed surface of the fan track liner is curved so as to define a concave portion of the gas washed surface (e.g. curved such that the radial position of said forward portion of the gas washed surface varies in an axial direction). The concave portion may be configured so as to modify and optimise the flow path of air over tips of fan blades, when the fan casing arrangement is arranged around a fan having a plurality of blades.

The curved gas washed surface of the fan track liner means that there is increased clearance provided between the fan track liner and a tip of a fan blade at a leading edge of the blade (when the fan track liner is arranged on a gas turbine engine). This increased clearance provides more room for fan blade movement and minimizes the potential for the fan blades to rub against the fan track liner at the leading edge. Even though the clearance between the fan blade and the gas washed surface of the fan track liner has increased, the aerodynamic performance of an engine is maintained because the curved surface modifies and optimises the flow path of air over the tip of the blades.

The forward portion of the gas washed surface may have an axial extent and position such that, in use, it extends from a position axially forward of a fan blade of a fan to a position axially aligned with a chordwise position (e.g. point on) of the fan blade (e.g. the forward portion axially overlaps the fan blade).

A second portion of the gas washed surface of the fan track liner may be provided rearward of the first portion of the gas washed surface of the fan track liner. The second portion may be defined by a single slope surface. The second portion of the gas washed surface of the fan track liner may extend from the first portion to at least an axial position that in use is aligned with a trailing edge of a fan blade around which the fan casing arrangement is arranged. A third portion of the gas washed surface of the fan track liner may be provided rearward of the second portion (and axially rearward of the trailing edge of the fan blade).

Both a forward portion of the gas washed surface and a forward portion of a surface (e.g. outer surface) of the fan track liner proximal to (or nearest to) the casing member may be curved.

The fan track liner may comprise an abradable layer that defines the gas washed surface, and wherein before use (i.e. before any blade rub), the thickness of the abradable layer is substantially constant across the fan track liner.

The fan track liner may comprise a tray that defines a surface proximal to the casing member. A forward portion of the tray may have a curved shaped so as to define a curved convex surface proximal to the casing member.

An intermediate layer may be provided in the tray. An abradable layer may be provided on a radially inner side of the fan track liner. A septum layer may be provided between the abradable layer and the intermediate layer.

According to a second aspect there is provided a gas turbine engine comprising a fan having a plurality of fan blades and the fan casing arrangement according to the first aspect, wherein the fan casing arrangement circumscribes the fan.

A clearance gap may be provided between the fan blades and the fan track liner. The clearance gap between the fan blades (e.g. each or every fan blade of the fan) and the fan track liner may be greater towards a leading edge of the fan blades than towards a trailing edge of the fan blades.

The casing member may comprise a hook that is positioned axially forward of the fan blades and projects in a direction radially inwards and may additionally project axially rearwards.

The fan track liner may be pivotally connected to the casing member. Under normal operating conditions (i.e. when a fan blade has not been released from the fan) a gap may be provided between the fan track liner and the casing member in an axially forward position.

The fan track liner may comprise a plurality of arcuate fan track liner panels positioned circumferentially adjacent to each other so as to define an annulus.

According to a third aspect there is provided a gas turbine engine comprising a fan having a plurality of fan blades, and a fan casing arrangement that circumscribes the fan. The fan casing arrangement comprises an annular casing member; and a fan track liner provided radially inward of the casing member and connected thereto. A clearance gap is provided between the fan blades and the fan track liner, and wherein the clearance gap between the fan blade and the fan track liner is greater towards a leading edge of the fan blades than towards a trailing edge of the fan blades.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### DESCRIPTION OF THE DRAWINGS

Embodiments will now be described by way of example only, with reference to the Figures, in which:
**Figure 1** is a sectional side view of a gas turbine engine;
**Figure 2** is a sectional side view of a casing arrangement; and
**Figure 3** is a sectional side view of the casing arrangement and fan blade of Figure 2 with the maximum radial extent of the blade illustrated.

### DETAILED DESCRIPTION

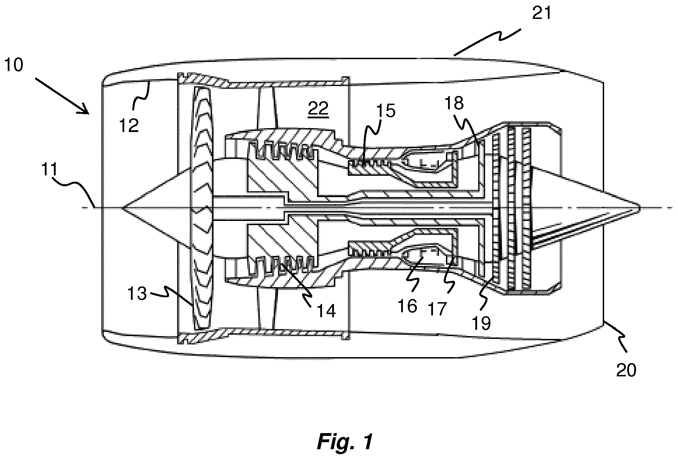

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

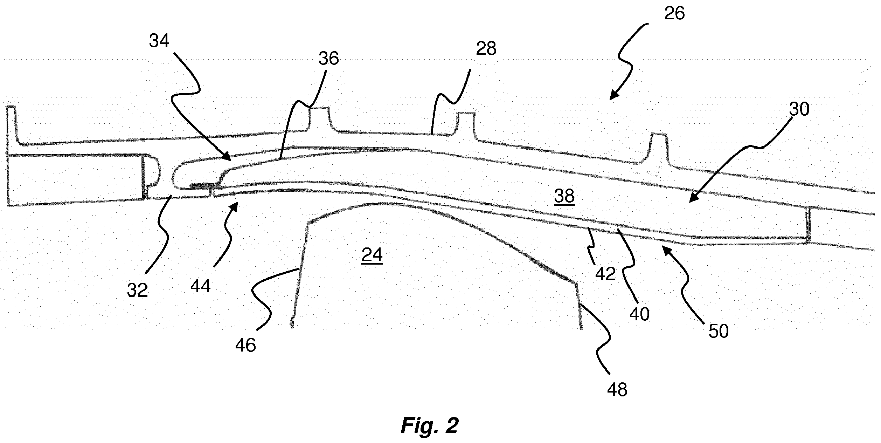

Referring to Figure 2, the fan (shown in 13 in Figure 1) includes a plurality of fan blades 24 arranged around a hub. A casing arrangement 26 circumscribes the fan blades 24. The casing arrangement includes an annular casing member 28 and a fan track liner 30.

The casing arrangement 26 is arranged such that in a rare failure event, where a fan blade 24 (or part of a fan blade) is released from the fan, the fan blade will be contained. In this example, the casing arrangement has a trapdoor configuration. The annular casing member 28 includes a hook 32 positioned forward of the fan blades 24. The hook is generally L-shaped and includes a portion that extends radially inward and a portion that extends axially rearward. The fan track liner 30 is connected to the hook by a fastener or other means that allows the fan track liner to pivot towards the annular member 28 if impacted by a fan blade so as to expose the hook 32. A gap 34 is provided at a forward portion of the fan track liner between the annular member 28 and the fan track liner 30 for the fan track liner to pivot into. The fan track liner may be connected to the casing member by bonding the liner to the casing member or by mechanically fixing the liner to the casing member. In the present example, the fan track liner includes a plurality of arcuate panels positioned circumferentially adjacent each other so as to define an annulus.

The fan track liner 30 includes a tray 36 proximal to the annular casing member. An intermediate layer 38, e.g. an aluminium honeycomb layer, is provided in the tray 36. A septum layer 40 is provided between the intermediate layer and an abradable layer 42 that is provided proximal to the fan blades 24.

Conventionally the forward portion of a fan track liner of a casing arrangement such as the one shown in Figure 2 would be straight and would be arranged to minimise tip leakage. That is, the fan track liner would be arranged such that the gap between a gas washed surface and the tip of the fan blade is minimised. The present inventors have gone against this design principle and propose curving a forward portion of the fan track liner so as to increase the clearance between the gas washed surface of the fan track liner and the leading edge 46 of the fan blades.

Referring to Figure 2, it can be seen that a forward portion 44 of the fan track liner 30 is curved, in this case curved outwards. The curved surface may be defined by a set of straight lines rather than being a continuous curve. The curved forward portion defines a concave gas washed surface, which results in a greater clearance between the fan track liner and the tip of the fan blade 24 at a leading edge 46 of the fan blade than compared to at a trailing edge 48 of the fan blade. The forward portion 44 of the fan track liner leads into a rearward portion 50 that defines a single slope rather than curved gas washed surface, similar to that found in conventional fan track liners. As such, the clearance between the tip of the blade and the fan track liner at the trailing edge of the fan blade is similar to that of a conventional arrangement.

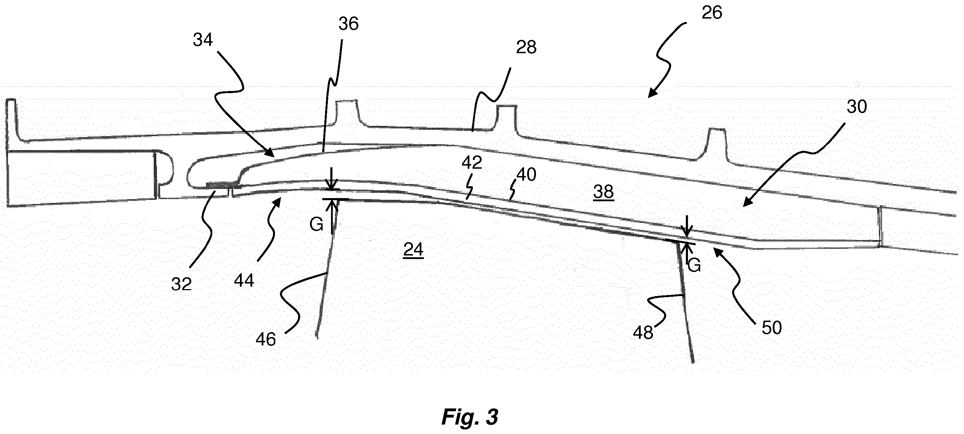

The fan blades 24 are non-planar, and arranged at an angle to the axial direction, accordingly the change in clearance between the fan blades and the fan track liner 30 is not clear from the outline of the fan blade 24 in Figure 2, which is a projection of the blades onto a 2D surface. The change in clearance can be more clearly seen in Figure 3, where the maximum extent of the fan blade is indicated rather than a projection of the blade. It can be seen, a gap G between the gas washed surface of the fan track liner and the fan blade tip is greater at an axial position aligned with the leading edge of the fan blades than at an axial position aligned with the trailing edge of the fan blades.

It has been found that increasing the gap G between the blade tip and the gas washed surface of the fan track liner at the leading edge can still have a comparable aerodynamic performance to conventional casing arrangements. Analysis has shown that curving a portion of the gas flow path over the blade tips alters the flow so as to optimise aerodynamic performance. The provision of a gap at the leading edge provides more room for fan blade movements and as such can reduce potential for rubbing of the abradable layer which can extend the life of the fan track liner.

The abradable layer 42 and septum layer 40 are both curved convexly. In this way, the thickness of the abradable layer can be provided at a thickness comparable to fan track liners of the prior art, so that the fan track liner can maintain integrity in the event of ice impact and/or impact by a foreign object.

The tray 36 defines a convex curved surface adjacent the annular casing member 28, and as such the intermediate layer defines a concave surface adjacent the septum layer 40 and a convex surface adjacent the tray 36. It has been found that this arrangement of the fan track liner 30 mitigates the risk of undesirable vibration modes, and also supports effective operation of the fan track liner in the event of a fan blade being released.

The casing arrangement 26 has been described as having a trap-door arrangement, but it will be understood by the person skilled in the art that other casing arrangements can be modified in a similar manner to that described to have a curved portion of the gas washed surface, and an increased clearance gap between the fan track liner and the tip of the fan blade at a leading edge of the fan blade compared to a trailing edge of the fan blade.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A fan casing arrangement for a gas turbine engine, the arrangement comprising:
an annular casing member; and
a fan track liner provided radially inward of the casing member and connected thereto;
wherein a forward portion of a gas washed surface of the fan track liner is curved so as to define a concave portion of the gas washed surface.

2. The fan casing arrangement according to claim 1, wherein the forward portion of the gas washed surface has an axial extent and position such that in use it extends from a position forward of a fan blade of a fan to a position axially aligned with a chordwise position of the fan blade (e.g. the forward portion axially overlaps the fan blade).

3. The fan casing arrangement according to claim 1 or 2, wherein a second portion provided rearward of the first portion of the gas washed surface of the fan track liner is defined by a single slope surface.

4. The fan casing arrangement according to claim 3, wherein the second portion of the gas washed surface of the fan track liner extends from the first portion to at least an axial position that in use is aligned with a trailing edge of a fan blade around which the fan casing arrangement is arranged.

5. The fan casing arrangement according to any one of the previous claims, wherein both a forward portion of the gas washed surface and a forward portion of a surface of the fan track liner proximal to the casing member is curved.

6. The fan casing arrangement according to any one of the previous claims, wherein the fan track liner comprises an abradable layer that defines the gas washed surface, and wherein before use, the thickness of the abradable layer is substantially constant across the fan track liner.

7. The fan casing arrangement according to any one of the previous claims, wherein the fan track liner comprises a tray that defines a surface proximal to the casing member, and wherein a forward portion of the tray has a curved shaped so as to define a curved convex surface proximal to the casing member.

8. The fan casing arrangement according to claim 7, wherein an intermediate layer is provided in the tray and an abradable layer is provided on a radially inner side of the fan track liner, with a septum layer being provided between the abradable layer and the intermediate layer.

9. A gas turbine engine comprising a fan having a plurality of fan blades and the fan casing arrangement according to any one of the previous claims, wherein the fan casing arrangement circumscribes the fan.

10. The gas turbine engine according to claim 9, wherein a clearance gap is provided between the fan blades and the fan track liner, and wherein the clearance gap between the fan blades and the fan track liner is greater towards a leading edge of the fan blades than towards a trailing edge of the fan blades.

11. The gas turbine engine according to claim 9 or 10, wherein the casing member comprises a hook that is positioned axially forward of the fan blades and projects in a direction radially inwards and axially rearwards.

12. The gas turbine engine according to claim 11, wherein the fan track liner is pivotally connected to the casing member, and wherein under normal operating conditions a gap is provided between the fan track liner and the casing member in an axially forward position.

13. The gas turbine engine according to any one of claims 9 to 12, wherein the forward portion of the gas washed surface extends from a position axially forward of the fan blades to position axially aligned with a chordwise point of the fan blade (e.g. the forward portion axially overlaps the fan blades).
